## Europäisches Patentamt

## European Patent Office

## Office européen des brevets

(19)

(11) Publication number: **0 041 842**
**B1**

(12) **EUROPEAN PATENT SPECIFICATION**

(45) Date of publication of patent specification: **05.11.86**

(51) Int. Cl.⁴: **C 09 J 7/04**

(21) Application number: **81302500.4**

(22) Date of filing: **05.06.81**

(54) Method of preparing a remoistenable starch-based adhesive coating.

(30) Priority: **05.06.80 GB 8018454**

(43) Date of publication of application:
**16.12.81 Bulletin 81/50**

(45) Publication of the grant of the patent:
**05.11.86 Bulletin 86/45**

(84) Designated Contracting States:
**AT BE CH DE FR GB IT LI NL SE**

(56) References cited:
**DE-B-1 061 938**
**GB-A- 998 691**
**GB-A-1 137 069**
**GB-A-1 207 387**
**US-A-2 791 512**

(73) Proprietor: **Smith & McLaurin Ltd.**
**Cartside Mills**
**Millikenpark Renfrewshire PA10 2AF (GB)**

(72) Inventor: **Thomson, Eric**
**Dunarden Horsewood Road**
**Bridge of Weir (GB)**

(74) Representative: **Wotherspoon, Graham et al**
**FITZPATRICKS 4 West Regent Street**
**Glasgow G2 1RS Scotland (GB)**

**The file contains technical information submitted after the application was filed and not included in this specification**

Courier Press, Leamington Spa, England.

## Description

The present invention relates to a method of preparing a remoistenable adhesive particularly, but not exclusively for coating paper substrates. In particular, the invention relates to a method of preparing a remoistenable starch-based adhesive coating.

A method of preparing an adhesive for use as a remoistenable coating is known from GB—A—1,137,069 (Reiling) for use in products such as gummed paper and tape and postage stamps. All adhesives listed in GB—A—1,137,069 as suitable for use with process of the said patent are cold water soluble. Some of the listed adhesives such as gelatin, natural gums, gum-arabic, agar-agar, carboxy methyl cellulose (cmc) derivatives and polyvinyl alcohol are prohibitively expensive, making the end product economically uncompetitive. Economic adhesives such as animal glue and similar proteinaceous glues provide an unpleasant odour and taste when remoistened by the user, which is a disadvantage of such adhesives. A further disadvantage of proteinaceous adhesives such as gelatin or animal glues is that an electrolyte is added during mixing of the coating preparation to shift the pH of the mixture from the isoelectric point and prevent undesired precipitation of adhesive particles. These electrolytes are acidic, such as citric acid, and give the gum a bitter taste which is frequently found unpleasant by the user.

Users of adhesive coated products such as postage stamps prefer an adhesive to be completely tasteless. Starch products such as British gum and dextrine, as mentioned in GB—A—1,137,069 are suitable adhesives and are economic. Certain products of the British gum/dextrine type (e.g. Amisol 3058 Trade Mark of C.P.C. (U.K.) Limited) give a stable mix of the type described in GB—A—1,137,069. Such products are highly converted and result in an adhesive coating of very low tack after remoistening when applied at a normal coating weight of 13—20 grams per square metre. Increasing the coating weight, although improving the tack slightly, makes the process and product uneconomical. In addition, products of this type which have been found to work with the process of GB—A—1,137,069 have had such a poor colour and strong odour that they are unacceptable as adhesive coatings for gummed labels or stamps. These disadvantages mitigate against the use of converted dextrines or British gums as suitable coating adhesives.

A pre-gelatinised starch is disclosed in GB—A—1,137,069 but is not further defined. Furthermore, pre-gelatinised starch is not mentioned in relation to remoistenable adhesives and there is no disclosure as to how the process operates using this adhesive.

Although the particular starch-based products mentioned in GB—A—1,137,069 are found to be unsuitable for the aforementioned reasons, other starch-based products are not disclosed as suitable adhesives.

In addition, of the possible solvents listed in this patent, the aromatic hydrocarbons toluene and xylene are the most practical and economic for use as the principal solvent. During the drying stage of the adhesive coating, most of the aromatic solvent is evaporated from the coating, and, although only minute quantities of solvent remain therein, these quantities, as low as 10—50 milligrams per square metre, are sufficient to give an unpleasant taste when the adhesive is remoistened. This is a disadvantage, particularly for postage stamps.

An object of the present invention is to obviate or mitigate the abovesaid disadvantages of adhesives in the preparation of adhesive coatings.

According to the present invention, there is provided a method of preparing an adhesive coated substrate comprising the steps of:—

a) forming a mixture of water, a water-soluble starch, an organic solvent and at least one water-insoluble polymer which is present in an amount of from 2—16 parts by weight per 100 parts of starch, and wherein the total water in the mix is 10—15 parts of water per 100 parts of starch by weight, and heating and mixing until globules of adhesive sol of a suitable particle size for coating are formed.

b) diluting the mixture by the addition of a further organic solvent to provide a dispersion of adhesive sol globules in the solvent which dispersion is of a viscosity suitable for coating.

c) coating a substrate with the dispersion, and

d) drying the coated substrate, which method is characterised in that the starch is a spray-dried starch capable of forming a stable aqueous sol which has a viscosity of from 100 to 700 cP (0.1 to 0.7 Ns/m$^2$), when a 2.5 part water to one part starch sol is measured at 20°C and whose stability is determined by monitoring the viscosity of sample aqueous sols of starch over a period of at least one week during which suitable starches exhibit no change in viscosity, and in that the polymer selected is a water insoluble polymer capable of stabilizing the aqueous sol and in that the organic solvent is an aromatic hydrocarbon, the polymer and aromatic solvent together forming an emulsion have a viscosity which renders it compatible with the aqueous sol and which can be measured by shaking up 150 parts of the emulsion in 200 parts by weight of isopropyl alcohol and measuring the viscosity in a Brookfield viscometer, and further in that the mixture is heated in a stirred mixing vessel to a temperature of from 50—80°C with the addition of a water miscible solvent before dilution of the mix.

In the GB—A—1,137,069 process, the total water in the mix is 10—50 parts of water per 100 parts of starch by weight. This means that the aqueous phase of the mixture is starch product solution or "sol" of a very high concentration. Therefore the starch product selected for the process must be readily soluble in water, and such starches are called "cold water soluble" starch products.

It has been found to be essential that an aqueous sol of the starch product selected must have a very high stability; any tendency to instability or "set-back" causes the mix to become unstable or to break. Starch granules are composed of two types of long chain carbohydrate molecules, namely amylose and amylopectin. The amount of each type in the starch varies with the source from which the starch is obtained. Amylose and amylopectin are chemically similar but have important physical differences. Amylose has a long polysaccharide chain, whereas amylopectin has a brached chain molecule. The straight chain amylose is more difficult to dissolve in water and tends to crystallise from aqueous solution easily. The branched chain amylopectin forms much more stable aqueous sols.

There are various ways of making a starch product which gives a very stable aqueous sol suitable for this process. One which has been very successful is to control the amount of amylose present. Normal oxidised starch products contain around 20% to 30% amylose and do not work in the Reiling process, giving poor and inconsistent results. Starches or dextrines produced by normal means of substitution or hydrolysis, and having 10—20% amylose content may perhaps be used to produce an adhesive dispersion in the Reiling process, but with these starch products, the coating from the dispersion is very gritty and, in addition, the mixture is very unstable.

One class of starch based products which gives successful results in the GB—A—1,137,069 process is where the amylose content is low, say below 10% on dry weight of starch product. One way of obtaining a starch with a low amylose content is from the separation of the two starch fractions amylose and amylopectin, occurring in, for instance, potato starch, to give two products and selecting the one with the high amylopectin and low amylose content. Another way is to select a starch product derived from waxy maize which has a very low amylose content (less than 5%).

Another way of obtaining a starch product with suitable stability for the process is to substitute some of the hydroxyl groups on the amylose and amylopectin polysaccharide chains.

One indication of the suitability and stability of the starch product for use with the known process is to prepare an aqueous sol and check the viscosity of this over a period of one to two weeks. A typical concentration for such a sol would be 2.5 part water to 1 part starch by weight. The viscosity should remain stable over this period.

When dissolving starch products in water, it is difficult to prepare a starch solution with more than one part of starch per one part of water by weight. However, in the mixture, the amount of starch per one part of water is at least two by weight. In order to facilitate the preparation of this highly concentrated starch solution in the mixing process, not only does the starch have to be readily water soluble but the physical form of the starch granules is also very important. It has been found that the starch product should be spray dried. Cold water soluble starches are normally converted from a solution into a dry form by two methods. One method is known as spray drying and involves drying the starch product by spraying the solution into a stream of hot air. This produces a dry powder of small and regular particles size. The spray dried particles are convoluted, with a large surface area which allows the water ready access to the starch product and to aid the preparation of a highly concentrated starch solution. The other procedure is known as drum drying; this produces flakes which can be ground down to a powder, the particles of which are larger and more irregular in comparison to the spray dried particles. Although it is possible to produce a mix using ground starch, it requires a much more powerful mixing apparatus and the mix can be less stable and prone to give grit or lumps during coating.

The viscosity of the starch solution must be correctly chosen; it should be high enough to give a sufficiently tacky firm on remoistening when used at an economic weight (say 20 g/m$^2$ or less). The viscosity of the starch solution, or aqueous phase, must also be compatible with the viscosity of the solvent phase and for the mixing conditions to be used. For example, if the viscosity of the aqueous phase is too high in relation to the solvent phase viscosity, the particle size of the aqueous phase will not be reduced to a convenient coating size mixture; the particles of the aqueous phase mixture will be too rough for coating or the particles will break or destabilise during the prolonged mixing. In the same way, the viscosity of the solvent phase must also be matched to that of the aqueous phase for a given mixing conditions. If the viscosity of the solvent phase is too high in relation to the aqueous phase, the mixture breaks or destabilises during mixing. Once a starch product of an acceptable viscosity has been found, it is important to maintain this from batch to batch. The acceptable level of the viscosity can vary quite widely, depending on the solvent phase viscosity and the mixing conditions used. For example a minimum viscosity would be about 100—125 cP (0.1 to 0.125 Ns/m$^2$) when a 2.5 part water to one part starch sol is measured at 20°C. Acceptable results have been obtained with starches with viscosities as high as 700 cP (0.7 Ns/m$^2$), measured under the same conditions, provided that the other mixture variables particularly the solvent phase viscosity, are adjusted to suit.

In order to get the starch to dissolve in the small amount of water available in the mixture, the mixture is heated. The temperature to which the mixture is raised depends on the volatility of the solvents used, but typically, where toluene is the initial solvent, the temperature would be raised to 60—80°C. The time for which the temperature is maintained at this level depends on the mixer used and the rate of temperature rise. Under typical conditions about 30—60 minutes are required to raise the mixing temperature, and the mixing time is 5—50 minutes. When the starch is added to the mixing process it rapidly absorbs the water from the aqueous layer, thus destabilising the polymer emulsion and precipitating the polymer. This destabilising effect occurs much more quickly with starch products than with other remoistenable adhesives such as glue or gelatin. If the destabilisation occurs too quickly, the precipitated polymer does not dissolve efficiently in the solvent and the mix will not form properly. In order to control the destabilising effect, the starch must be added relatively slowly. It has been found that the use of a starch product which is slightly hydrophobic can help to eliminate destabilisation and aid the smooth incorporation of the starch at the start of the mixing process. Such a product can be made by slight esterification of the starch by a long chain fatty acid. The destabilisation process is also controlled by carefully monitoring the moisture content of the spray dried starch product which is used. If the moisture content of the starch is between 4% and 5% consistent results are obtained. If the moisture content is allowed to rise significantly above 5%, the destabilisation effect becomes more pronounced. A mixture of a starch based product and gelatin or either animal or bone glue can also be used to give a mixture which is economic and also acceptable for taste and smell.

The initial solvent which forms the solvent phase during the mixing process consists of 15—120 parts of solvent by weight per 100 parts of adhesive. The second component in the solvent phase is a water insoluble polymer which is usually added before the mixing step and which comprises 2—16 parts by weight per 100 parts of adhesive. The polymer is normally added in the form of a polymer emulsion. The choice of polymer is very important. It is thought to have two functions in the process; one is to sterically stabilise the globules of starch sol and the other is to control the viscosity of the solvent phase. It may be possible to find many polymers which are suitable steric stabilisers in this type of process, and obviously the choice will depend on the solvent used and the starch product used. We have found three classes of polymers which seem to be particularly suitable; these are ethyl or methyl methacrylate/2-ethyl hexyl acrylate copolymers, vinyl acetate/2-ethyl hexyl acrylate copolymers and polyvinyl propionate.

The polymer particles are thought to dissolve in the solvent to form the solvent phase and the aqueous part of the polymer emulsion is thought to join up with the water added at the start to form the aqueous phase in which the starch is dissolved. It is therefore very difficult to actually measure the viscosity of the solvent phase in this complex mixture. However, we have devised a measurement which we call the "intrinsic viscosity" of the polymer emulsion which is thought to correlate with the solvent phase viscosity in the mixing process. Intrinsic viscosity is measured by shaking up 150 parts of the polymer emulsion in 200 parts, by weight, of isopropyl alcohol and measuring the viscosity with a Brookfield viscometer. As already explained, acceptable values for the solvent phase viscosity depend on the viscosity of the aqueous phase, ie the starch viscosity and also on the mixing conditions used. We have found that with a starch which gives a viscosity of 150 cP ($0.15 \text{ Ns/m}^2$) in a 2.5 parts water to 1.0 parts starch by weight sol, an acceptable polymer emulsion intrinsic viscosity is 50—150 cP ($0.05$—$0.15 \text{ Ns/m}^2$), while using a starch which gives a viscosity reading about 500 cP ($0.5 \text{ Ns/m}^2$) under the above conditions, the required intrinsic viscosity value rises to 250—400 cP. ($0.25$—$0.4 \text{ Ns/m}^2$). Once the optimum intrinsic viscosity of the polymer emulsion has been determined for a particular mixture with a particular starch based product, it is essential that this viscosity is maintained closely. It has been found that the normal batch to batch variation of the intrinsic viscosity of commercial grades of polymer emulsions is too wide to give consistently acceptable results in starch-based type mixes of GB—A—1,137,069. When the intrinsic viscosity is too high, the mixture is very difficult to agitate during the initial mixing stages, and the mixture can break during mixing or during the addition of dilution solvent. When the solvent phase viscosity is too low, the adhesive particles size take a long time to reduce, requiring prolonged mixing which causes the mixture to break or not to accept dilution solvent satisfactorily. A long mixing time can also lead to instability after dilution and the formation of grit or lumps in the adhesive. The disadvantage of wide variation of intrinsic viscosities of commercial grades of polymer emulsion is overcome by careful pre-selection of the polymer emulsion batches using the intrinsic viscosity test or by blending two or more suitable polymer emulsions of different viscosity levels and varying the proportions of each to keep the intrinsic viscosity constant.

The GB—A—1,137,069 also states that water miscible and immiscible solvents can be used in the process and lists the following solvents, alone or in combinations:—

— Alcohols, such as methyl alcohol, ethyl alcohol, isopropanol,
— Ketones, such as acetone and methyl ethyl ketone,
— Glycols, such as hexylene glycol,
— Benzene, xylene, toluene, naphtha, diacetone and the chlorinated hydrocarbons.

It is, however, essential that, with a starch-based product, the major solvent is water immiscible. This rules out alcohols and ketones and leaves hydrocarbons and chlorinated hydrocarbons. The chlorinated hydrocarbons are not suitable due to toxicity and cost. Naphtha and diacetone are expensive. Benzene is also highly toxic. Only aromatic hydrocarbons have the solvency required by the process, and toluene is preferred to xylene, since less energy is required to remove toluene from the adhesive coating. The amounts of initial toluene required for the mix have already been referred to. Toluene may also be added at the dilution stage, and here the amount is 40—140 parts by weight of diluting solvent per 100 parts of adhesive.

In order to get an acceptable adhesive coating with a starch-based adhesive, it is important to add an alcohol-based or other water miscible solvent at some stage during the mixing process before the dilution step. This can be added at the start, during the mixing, or after mixing and just before dilution. Suitable alcohols are methanol, isopropanol, secondary butanol and others of this type. The amount of alcohol added per 100 parts of adhesive is 4—50 parts by weight. If the alcohol is added at the start of the mixing process, this can inhibit the temperature to which the mixture is raised during mixing or grinding; for example, if methanol is used, because of its boiling point the mix should not be heated higher than 60°C. If the alcohol is added after the grinding or mixing step, then the temperature can be raised to 80°C. if the initial solvent is toluene, and after mixing can be cooled to 60°C. before the addition of methanol and the subsequent dilution step.

We have found that with the starch or glue based products, it is possible to use as the diluting solvent an aliphatic hydrocarbon.

Such a hydrocarbon is known as SBP2, SBP3, or SBP5, as supplied by Carless Hydrocarbons. These are aliphatic hydrocarbon fractions obtained from the distillation of petroleum and they vary in boiling point and composition. An advantage of the use of such solvents is the fact that they are usually cheaper than solvents with higher dissolving powers such as toluene or xylene. A further advantage of the use of such solvents is described below:

During the drying stage of the process most of the solvent is removed by evaporation, but it is extremely difficult to completely remove the organic solvent without overdrying the paper or other substrate. Although only minute quantities of solvent remain in the gum, with aromatic hydrocarbons these amounts can be sufficient to give an unpleasant taste to the gum. This can occur with quantities as low as 10—50 milligrams per square meter of retained solvent. In postage stamps, it is essential that the gum coating is completely tasteless and the present invention incorporates a way of ensuring that this is the case. Two methods have been found to achieve this. The first concerns the use of an aliphatic hydrocarbon at the dilution stage in the mixing process. Here, it is not necessary to use as strong a solvent as is required during the earlier stage of mixing, and an aliphatic hydrocarbon can be used. This means that in the final diluted dispersion and in the adhesive coating, the major part of the solvent is aliphatic, and, as these solvents do not have the unpleasant taste associated with aromatic hydrocarbons and although they are also retained in the gum layer the level of taste drops very noticeably. It is also possible by choice of aliphatic hydrocarbon as regards boiling point or boiling range, to ensure that any minute quantities of solvent which might remain in the gum are aliphatic rather than aromatic. An aliphatic solvent which has been found suitable is the petroleum fraction known as SBP3, supplied by Carless Hydrocarbons.

Another method is to incorporate into the dispersion a small quantity of a chemical which, during the drying stage will flash off in such a way as to leave pores in the gum layer which facilitate the evaporation of the remaining solvent, thus lowering the amount of retained aromatic hydrocarbon in the final coated product. Flash evaporating agents such as oxitol and methyl oxitol, have been found suitable for this purpose; these are supplied by Shell Chemical Company.

The starch-based mixture can be prepared with a range of mixers. The one found to be most suitable includes a stainless steel mixing vessel jacketed for both steam and cooling water. This has a centrally placed high-speed agitator running at about 1,000 r.p.m. and driven by a 25 horse-power motor and a rotating-arm agitator the arms of which are close and parallel to the vessel sides and are fitted with PTFE scraper blades which completely scrape the vessel sides clean The agitator turns at about 25 r.p.m. and is driven by a motor in the opposite direction from the high-speed stirrer. Mixtures can also be successfully prepared by the use of a single high-speed stirrer of the Cowles, a dissolver type, or the use of a sigma blade mixer (two intersecting Z-shaped stirrer blades which move in opposite directions). The former mixer described gives the best results in terms of short mixing time and reasonable mix handling procedures.

Regarding the stability of the mix it is possible to prepare a stable mix which dilutes to coating viscosity in an acceptable manner. This, however, does not mean that the mixture is commercially acceptable. It must be stable to handling and running on paper coating production equipment. This means that it should have a 'pot life' of at least two hours and be able to stand up to fluid shear stresses created by pumping and whatever coating application method is used. If the mix does not have the required stability to resist a long "pot life or shear stresses" the mixture gradually becomes gritty during use, giving rise to small lumps on the adhesive coating. When the mixture so destabilises the incidence of grit or lumps increases with time. The adhesive lumps render the end product unacceptable commercially because they can become detached during further handling, such as sheeting or reeling, and they make the proper printing of the label or stamp paper impossible, particularly by the offset litho process where the lumps can become attached to the printing blanket and give rise to "hickeys".

In order to minimise the risk of starch-based mixes becoming unstable during use it is important that the mix handling equipment and the systems supplying coating mix to and from the coating machine head are designed (a) to put minimum shear on the mixture and (b) to ensure that any lumps or thickened mixture which is formed by the action of shear, are filtered in order to reduce the possibility of lumps on the paper surface during coating. (a) is achieved by using pumps with a low shearing action (for instance, a diaphragm type pump as distinct from a centrifugal pump) and also by using filters with a large enough surface area to allow the required amount of mixture to go through without undue shearing action occurring at the surface of the filter. The method and apparatus for coating the adhesive onto a substrate should also supply minimum shear stress to the mix. (b) is achieved by having a good flow of mixture with no dead spots in the coating pan and filtering the mixture immediately before entry to the coating pan. If Meyer rod coating is used or a similar method where excess coating is applied to the paper and then "doctored" off, the excess coating from the rod, or similar should not be returned to the pan containing the coating mixture but should be separated and filtered before re-entry to the coating pan.

If coating by Meyer rod or a similar method where the coating comes into contact with the paper and is 'doctored' off back into the main body of mixture and then re-applied, it has been found that chemicals can be leached from the base paper which cause instability in the starch-based mixtures. The most common example of this is the leaching out of alum. The aluminium ions seem to cause destabilisation of the mixture and the use of alum-free base paper can given a decided improvement in mix stability where this is a problem.

It has been found that the use of a starch-based product can give rise to more dusting of the adhesive during slitting or guillotining than when a glue-based product is used. Glues contain small amounts of animal fat which are thought to lubricate the cutting knife, whereas starch based products are free of such substances. It has been found that the addition of Petrolatum (a lubricating agent) to the mixture can help to avoid dusting during cutting, presumable by lubricating the cutting knife.

The stability of the diluted mix to shear can be increased by the addition of a stabilising agent or agents. These agents are of two major types: stabilising agents with an HLB value to suit the water solvent system in the mixture. The mixture 1 has an HLB value of approximately 10, and it has been found that stabilising agents with this value, such as HA1093 (Trade Mark of Atlas Chemical Co., U.K.) give improved stability. This is added to levels of 0.75 parts by weight per 100 parts of adhesive. The second type of stabilising agent is a block co-polymer type, such as development product polymeric surfactant 246 (ICI Paints).

Such stabilising agents also give protection from breakdown due to shear.

Embodiments of the present invention will now be described with reference to the following examples:—

Example 1

32 gallons of toluene (0.145 m$^3$), 15 gallons (0.068 m$^3$) of water and 124 kg of Acronal 880D, Trade Mark for vinyl acetate/2-ethyl hexyl acrylate copolymer, (manufactured by BASF in Germany) are added to the mixing kettle and mixed for two minutes with both mixer blades running.

With both mixers still running, 250 kg of Amylogum CLS474, Trade Mark for a starch which is fractionated potato starch product of low amylose content, having an aqueous viscosity of approximately 175 cP, (0.175 Ns/m$^2$) (Avebe, Veendam in Holland) is added. The starch is added at a constant rate through a 4″ diameter conveyor pipe. Once the starch has mixed in, a further 125 kg of the starch is added and also allowed to mix in. 25 kg of sodium nitrate is then added (sodium nitrate is a plasticiser, or humectant, which are substances normally added to gum coated papers or tapes in order to make the coating more pliable and to enable the adhesive to hold onto the water after remoistening in order to extend the open time). The steam to the jacket is switched on, and the final 125 kg of starch are added and mixed in. The temperature of the mix is allowed to rise to 50°C by heating from the steam jacket, and at this stage 11 gallons of methanol are added. When the temperature reaches 60°C, the steam is turned off and the particle size of the mix is measured using a Hegman gauge. At this stage, the average particle size is usually in excess of 80 microns. The mixing is continued until the average particle size drops to 70—80 microns. This normally takes 15—30 minutes, and when the average particle size reaches this range, 20 kg of isopropanol is added, and mixing is continued for a further five minutes. The dilution toluene is then added in quantities of 5, 5 and 10 gallons (0.022, 0.022 and 0.045 m$^3$) checking that each addition is properly mixed in before the next one is made. Once this has been completed, the final make-up toluene of approximately 90 gallons (0.409 m$^3$) is added, in order to bring the mix to coating viscosity.

Example 2

70 gallons of toluene (0.318 m$^3$), 125 kg of Primal Rhoplex B10, Trade Mark for a polymer emulsion, thought to be an ethyl acrylate/methyl methacrylate copolymer (Rohm and Haas Limited) and 19 gallons (0.086 m$^3$) of water are added to the mixing kettle and mixed for two minutes with both mixers running. The polymer emulsion should have an intrinsic viscosity of around 100 cP (0.1 Ns/m$^2$). With both mixers still on, 250 kg of Avebe CLS 475 (Trade Mark) starch, fractionated starch product of low amylose content, having an aqueous viscosity of about 300 cP (0.3 Ns/m$^2$), is added through the starch conveyor. Once the starch has been mixed in, a further 125 kg of the starch is added and also allowed to mix in. The steam to the jacket is switched on and the final 125 kg of starch is added and allowed to mix in. Mixing is continued until the temperature rises to 80°C, which takes approximately 40 minutes, and at this stage the steam is turned off and mixing is continued for a further 15 minutes. At this stage, the particle size is checked and should be about 75 microns. 10 kg of Petrolatum NF is then added. Cooling water is then added to the mixer jacket and mixing continued until the temperature drops to 60°C (approximately 30 minutes). At this stage, 36 gallons (0.163 m$^3$) of methanol are added in four nine gallon lots, allowing each lot to mix for 15 minutes, and the particle size checked. At this stage, the particle size is about 50 microns, but if it is still greater than 65 microns, mixing is continued until the particle size drops to 50 microns. 20 gallons (0.091 m$^3$) toluene is then added in lots of 5, 5 and 10 gallons (0.022, 0.022 and 0.045 m$^3$), allowing each lot to mix in before the next is added. When this is complete the final make-up toluene of approximately 80 gallons (0.363 m$^3$) is added to bring the viscosity within the correct range for coating.

Example 3
As Example 1, except that 10 kg of mono propylene glycol is added instead of 25 kg of sodium nitrate. The mono propylene glycol is a humectant of the same type as sodium nitrate.

Example 4
As Example 1, except that 40 kg of secondary butanol is added instead of 20 kg of isopropanol.

Example 5
As Example 2, except that 10 kg of methyl oxitol is added following the 36 gallons (0.163 m$^3$) of methanol. Methyl oxitol enables venting of the coating and reduces the taste of residual toluene in the finished product.

Example 6
As Example 1, except that the dilution and make-up toluene are replaced by the same amounts of SBP3. The purpose of this is to reduce the taste of aromatic hydrocarbon in the finished coated product.

Example 7
As Example 2, except that the make-up and dilution toluene is replaced by the same amount of SBP3.

Example 8
As Example 1, except that 24 gallons (0.109 m$^3$) of methanol are added initially with 38 gallons (0.172 m$^3$) of toluene. No methanol or isopropanol is added after heating. The dilution toluene is about 65 gallons (0.295 m$^3$).

Example 9
As Example 2, except that the Amylogum CLS 475 (Trade Mark) starch is replaced by Amylum PL 638—103, a Trade Mark for an esterified starch product based on waxy maize starch with an aqueous viscosity of approximately 300 cPs (0.3 Ns/m$^2$) made by Amylum in Aalst, Belgium.

Example 10
As Example 2, except that the Amylogum CLS 475 starch is replaced by Amylum PL 678—104, a Trade Mark for a stable starch product based on corn starch and thought to be both esterified and etherified, having a viscosity of approximately 350 cP (0.3 Ns/m$^2$) made by Amylum in Belgium.

Example 11
As Example 1, but substituting Plex 4853D (Trade Mark) for Acronal 880D, which is a Trade Mark for a polymer emulsion of 60% solids content where the polymer is thought to be an ethyl hexyl acrylate/methyl methacrylate co-polymer (it is made by Rohm in Germany). The use of this polymer emulsion means that the initial toluene has to be increased from 32 to 38 gallons (0.145 to 0.172 m$^3$) due to the higher intrinsic viscosity of this polymer; the water addition from 15 to 21 gallons (0.068 to 0.095 m$^3$), and the amount of polymer emulsion used reduced from 124 kg to 100 kg. The make-up toluene required is approximately 130 gallons (0.591 m$^3$).

Example 12
As Example 11, but replacing 25 kg of the Plex 4853D by Vinamul 6825 which is a Trade Mark for a polymer emulsion of 56% solids and is thought to be a vinyl acetate/2-ethyl hexyl acetate co-polymer (made by Vinyl Products in England). In this case, the make-up toluene required is approximately 100 gallons (0.454 m$^3$).

Example 13
As Example 1, but reducing the initial charge of toluene from 32 gallons to 25 gallons (0.145 to 0.113 m$^3$), the initial charge of water from 15 gallons to 10 gallons (0.068 to 0.045 m$^3$), and the initial charge of Acronal 880D from 124 kg to 100 kg. When the temperature reaches 60°C, 25 kg of Propiofan 800D is added. Propiofan is a Trade Mark for a polymer emulsion of 50% solids which is thought to be polyvinyl propionate (manufactured by BASF in Germany).

**Claims**

1. A method of preparing an adhesive coated substrate comprising the steps of:—
a) forming a mixture of water, a water-soluble starch, an organic solvent and at least one water-insoluble polymer which is present in an amount of from 2—16 parts by weight per 100 parts of starch, and wherein the total water in the mix is 10—15 parts of water per 100 parts of starch by weight, and heating and mixing until globules of adhesive sol of a suitable particle size for coating are formed.

b) diluting the mixture by the addition of a further organic solvent to provide a dispersion of adhesive sol globules in the solvent which dispersion is of a viscosity suitable for coating.

c) coating a substrate with the dispersion, and

d) drying the coated substrate, which method is characterised in that the starch is a spray-dried starch capable of forming a stable aqueous sol which has a viscosity of from 100 to 700 cP; (0.1—0.7 Ns/m$^2$), when a 2.5 part water to one part starch sol is measured at 20°C and whose stability is determined by monitoring the viscosity of sample aqueous sols of starch over a period of at least one week during which suitable starches exhibit no change in viscosity, and in that the polymer selected is a water insoluble polymer capable of stabilizing the aqueous sol and in that the organic solvent is an aromatic hydrocarbon, the polymer and aromatic solvent together forming an emulsion having a viscosity which renders it compatible with the aqueous sol and which can be measured by shaking up 150 parts of the emulsion in 200 parts by weight of isopropyl alcohol and measuring the viscosity in a Brookfield viscometer, and further in that the mixture is heated in a stirred mixing vessel to a temperature of from 50—80°C with the addition of a water miscible solvent before dilution of the mix.

2. A method according to claim 1 wherein the moisture content of the spray-dried starch is controlled to lie between 4 and 5%.

3. A method according to claim 1 or 2 wherein the starch has a low amylose content or is chemically treated by esterification and/or etherification.

4. A method according to claim 3 wherein the starch is esterified with a long chain fatty acid.

5. A method according to any one of the preceding claims wherein the polymer is selected from ethyl or methyl methacrylate/2-ethyl hexyl acrylate copolymers, vinyl acetate/2-ethyl hexyl acrylate copolymers, polyvinyl propionate and mixtures thereof.

6. A method according to any one of the preceding claims wherein said further solvent is an aliphatic hydrocarbon.

7. A method according to any one of the preceding claims wherein oxitol or methyl oxitol is added at the mixing stage so that when the mixture is dried, the oxitol and methyl oxitol flash evaporates resulting in pores in the adhesive coating thereby facilitating evaporation of the said solvent.

8. A method according to any one of the preceding claims wherein gelatin or glue is mixed together with said starch.

9. A method according to any one of the preceding claims wherein the mixture includes a stabilising agent.

**Patentansprüche**

1. Verfahren zum Herstellen eines mit einem Klebstoffs beschichteten Substrats durch

a) Zubereiten einer Mischung aus Wasser, einer wasserlöslichen Stärke, einem organischen Lösungsmittel und wenigstens einem wasserunlöslichen Polymer, welches in einer Menge von 2 bis 16 Gewichtsteilen auf 100 Gewichtsteile Stärke zugegeben wird, während der Wassergehalt der Mischung 10 bis 15 Gewichtsteile pro 100 Gewichtsteile Stärke beträgt, und Vermischen der Bestandteile unter Erhitzen bis zur Bildung kugeliger Partikel aus klebendem Sol in einer zu Beschichten geeigneten Größe,

b) Verdünnen der Mischung durch Zugeben eines weiteren organischen Lösungsmittels zum Bilden einer Dispersion der klebenden Sol-Partikel in dem Lösungsmittel bis zum Erreichen einer zum Beschichten geeigneten Viskosität der Dispersion,

c) Beschichten des Substrats mit der Dispersion, und

d) Trocknen des beschichteten Substrats, dadurch gekennzeichnet, daß als Stärke eine sprühgetrocknete Stärke verwendet wird, mit welcher sich ein stabiles, wässriges Sol bilden läßt, des bei einer Zusammensetzung aus 2,5 Gewichtsteilen Wasser und 1 Gewichtsteil Stärke bei 20°C eine Viskosität zwischen 100 und 700 cP (entsprchend 0,1 bis 0,7 Ns/m$^2$) aufweist und als stabil gilt, wenn sich bei Proben des wässrigen Stärke-Sols über einen Zeitraum von wenigstens einer Woche hinweg keine Veränderung der Viskosität beobachten läßt,

daß als organisches Lösungsmittel ein aromatischer Kohlenwasserstoff ausgewählt und als wasserunlösliches Polymer ein solches ausgewählt wird, welches das wässrige Sol zu stabilisieren vermag, wobei das aromatische Lösungsmittel und das Polymer gemeinsam eine Emulsion mit einer Viskosität bilden, die sie mit dem wässrigen Sol verträglich macht, wobei die Viskosität dadurch gestimmt wird, daß man 150 Gewichtsteile der Emulsion in 200 Gewichtsteilen Isopropylalkohol aufschüttelt und dann die Viskosität in einem Brookfield-Viskosimeter mißt,

und daß man die Mischung unter Rühren in einem Gefäß auf eine Temperatur von 50°—80°C erhitzt und dabei ein mit Wasser mischbares Lösungsmittel zusetzt, ehe die Mischung verdünnt wird.

2. Verfahren nach Anspruch 1, dadurch gekennzeichnet, daß der Feutigkeitsgehalt der sprühgetrockneten Stärke auf einen Wert zwischen 4% und 5% eingestellt wird.

3. Verfahren nach Anspruch 1 oder 2, dadurch gekennzeichnet, daß eine Stärke verwendet wird, welche einen niedrigen Amylose-Gehalt hat oder verestert und/oder unter Ätherbildung chemisch umgesetzt ist.

4. Verfahren nach Anspruch 3, dadurch gekennzeichnet, daß die Stärke mit einer langkettigen Fettsäure verestert ist.

5. Verfahren nach einem der vorhergehenden Ansprüche, dadurch gekennzeichnet, daß das Polymer aus der Gruppe der Äthyl- oder Methylmethacrylat/2-Äthylhexylacrylat-Copolymere, der Vinylazetat/2-Äthylhexylacrylat-Copolymere, der Polyvinylpropionate und deren Mischungen ausgewählt wird.

6. Verfahren nach einem der vorhergehenden Ansprüche dadurch gekennzeichnet, daß das weitere Lösungsmittel ein aliphatischer Kohlenwasserstoff ist.

7. Verfahren nach einem der vorhergehenden Ansprüche, dadurch gekennzeichnet, daß während des Vermischens Oxitol oder Methyloxitol zugesetzt wird, welches beim Trocknen der aufgetragenen Mischung rasch verdampft und in der klebrigen Beschichtung Poren hinterläßt, welche das Verdampfen des Lösungsmittels erleichtern.

8. Verfahren nach einem der vorhergehenden Ansprüche, dadurch gekennzeichnet, daß der Stärke Leim oder Gelatine zugemischt wird.

9. Verfahren nach einem der vorhergehenden Ansprüche, dadurch gekennzeichnet, daß die Mischung ein Stabilisierungsmittel enthält.

**Revendications**

1. Procédé de préparation d'un substrat revêtu d'un adhésif comprenant les stades:

a) des formation d'un mélange d'eau, d'un amidon soluble dans l'eau, d'un solvant organique et d'au moins un polymère insoluble dans l'eau qui représente une quantité de 2 à 16 parties en poids pour 100 parties d'amidon, le total de l'eau dans le mélange étant de 10 à 15 parties d'eau pour 100 parties d'amidon en poids, et de chauffage et de mélange jusqu'à ce qu'il se forme des globules de sol adhésif ayant une dimension de particule qui convient pour le revêtement.

b) de dilution du mélange par l'addition d'un autre solvant organique pour donner une dispersion de globules de sol adhésif dans le solvant, cette dispersion ayant une viscosité qui convient pour le revêtement.

c) de revêtement d'un substrat à l'aide de la dispersion, et

d) de séchage du substrat revêtu, ce procédé étant caractérisé en ce que l'amidon est un amidon séché par pulvérisation, susceptible de former un sol aqueux stable qui a une viscosité comprise entre 100 et 700 cP (0,1 à 0,7 Ns/m²) quand on mesure un sol ayant 2,5 parties d'eau pour une partie d'amidon à 20°C et dont la stabilité est déterminée en surveillant la viscosité d'échantillons de sol aqueux d'amidon pendant une durée d'au moins une semaine au cours de laquelle des amidons convenables ne présentent pas de variation de viscosité, et en ce que le polymère choisi est un polymère insoluble dans l'eau, susceptible de stabiliser le sol aqueux et en ce que le solvant organique est un hydrocarbure aromatique, le polymère et un solvant aromatique formant ensemble une émulsion ayant une viscosité qui la rend compatible avec le sol aqueux et qui peut être mesurée en agitant 150 parties de l'émulsion dans 200 parties en poids d'alcool isopropylique et en mesurant la viscosité au viscosimètre Brookfield, et en outre en ce que le mélange est porté, dans un récipient de mélange agité à une température de 50 à 80°C, avec addition d'un solvant miscible à l'eau avant dilution du mélange.

2. Procédé suivant la revendication 1 dans lequel la teneur en humidité de l'amidon séché par pulvérisation est réglée entre 4 et 5%.

3. Procédé suivant la revendication 1 ou 2, dans lequel l'amidon a une faible teneur en amylose ou est traité chimiquement par estérification et/ou éthérification.

4. Procédé suivant la revendication 3 dans lequel l'amidon est estérifiée par un acide gras à chaîne longue.

5. Procédé suivant l'une quelconque des revendications précédentes, dans lequel le polymère est choisi parmi les copolymères de méthacrylate d'éthyle ou de méthyle et d'acrylate de 2-éthyl hexyle, les copolymères d'acétate de vinyle et d'acrylate de 2-éthyl hexyle, le poly(propionate de vinyle) et leurs mélanges.

6. Procédé suivant l'une quelconque des revendications précédentes dans lequel ledit autre solvant est un hydrocarbure aliphatique.

7. Procédé suivant l'une quelconque des revendications précédentes, dans lequel de l'oxitol ou du méthyl oxitol est ajouté au stade de mélange de manière à ce que, quand le mélange est séché, l'oxitol et le méthyl oxitol subissent une évaporation flash donnant des pores dans le revêtement adhésif, ce qui facilite l'évaporation dudit solvant.

8. Procédé suivant l'une quelconque des revendications précédentes, dans lequel de la gélatine ou de la colle est mélangée à l'amidon.

9. Procédé suivant l'une quelconque des revendications précédentes, dans lequel le mélange comprend un agent de stabilisation.